# EUROPÄISCHE PATENTANMELDUNG

(11) **EP 3 763 644 A1**
(43) Veröffentlichungstag der Anmeldung: **13.01.2021**
(21) Anmeldenummer: 20173125.4
(22) Anmeldetag: 06.05.2020
(51) Int. Cl.: B65G 47/86

(54) **ROTATIONSKOPF MIT ROTIERENDEN ARBEITSSTATIONEN**

(30) Priorität: 12.07.2019 DE 102019210354
(71) Anmelder: Theegarten-Pactec GmbH & Co. KG, 01237 Dresden (DE)
(72) Erfinder: Dietrich, Mike, 01187 Dresden (DE); Ehlert, Sebastian, 01237 Dresden (DE); Oehlert, Volker, 01809 Doha/Röhrsdorf (DE)
(74) Vertreter: Grünecker Patent- und Rechtsanwälte PartG mbB

(57) **Zusammenfassung**

Die vorliegende Erfindung betrifft ein Verfahren zum Transportieren und ggf. Verpacken von kleinstückigen Artikeln, insbesondere von Lebensmittelartikeln wie Brühwürfeln oder Süßwaren, wie z.B. Hart- oder Weichkaramellen, Pralinen oder dergleichen, umfassend die Schritte:
Schritt A: Erzeugen wenigstens eines Produktstroms aus einer Vielzahl einzelner Artikel (A).
Schritt B: Aufnahme jedes Artikels (A) des Produktstroms in einer Halteeinrichtung (1') eines sich um eine Rotationsachse (X1) drehenden Rotationskopfs (1).

Um die aktive Zeit zur Bearbeitung des Artikels in einem vorzugsweise kontinuierlich rotierenden Rotationskopf zu verlängern, ist erfindungsgemäß vorgesehen:
Schritt C: Fördern jedes Artikels (A) des Produktstroms von einer Aufnahmestation (S1) zu einer Abgabestation (S2) über wenigstens eine volle Umdrehung um die Rotationsachse (X1) des Rotationskopfs (1).

Zudem betrifft die vorliegende Erfindung eine zugehörige Verpackungsvorrichtung.

## Beschreibung

Die vorliegende Erfindung betrifft ein Verfahren und eine Vorrichtung zur Verpackung von kleinstückigen Artikeln, insbesondere von Lebensmittelartikeln wie Brühwürfeln oder Süßwaren, wie z.B. Hart- oder Weichkaramellen, Pralinen oder dergleichen. Das Verfahren umfasst die folgenden Schritte:
Schritt A: Erzeugen wenigstens eines Produktstroms aus einer Vielzahl einzelner Artikel.
Schritt B: Aufnahme jedes Artikels des Produktstroms in einer Halteeinrichtung eines sich um eine Rotationsachse drehenden Rotationskopfs.

Ein derartiges Verfahren ist aus der EP 3 187 424 A1 bekannt.

Bei diesem Verfahren wird der zu verpackende Artikel in einer Aufnahmestation von einer vorgelagerten Zuführeinrichtung an den Rotationskopf bzw. Siegelkopf übergeben und damit zu einer Abgabestation gefördert. Der dem Artikel zugeordnete Packstoff wird während der Förderung von der Aufnahmestation in die Abgabestation gesiegelt.

Zur Versiegelung des Packstoffs muss während der Siegelzeit im vorzugsweise kontinuierlich rotierenden Rotationskopf bzw. Siegelkopf ein bestimmter Wärmeeintrag von der beheizbaren Halteeinrichtung auf den heißsiegelfähigen Packstoff erfolgen, um letzteren zu aktivieren. Eine hohe Heizleistung kann dabei den Packstoff und/oder das zu verpackende Produkt beschädigen, insbesondere wenn der zu verpackende Artikel hitzeempfindlich ist und beispielsweise Schokolade enthält. Eine geringe Heizleistung erfordert eine längere Siegelzeit.

Die Siegelzeit in einem kontinuierlich rotierenden Rotationskopf bzw. Siegelkopf ist dabei durch verschiedene Faktoren begrenzt, nämlich einerseits durch die Fördergeschwindigkeit der Artikel im Produktstrom und andererseits durch die Abmessungen des Rotationskopfs bzw. Siegelkopfs sowie die damit zu überbrückende Distanz des Artikels von der Aufnahmestation bis zur Abgabestation.

Es ist zwar grundsätzlich möglich, den Durchmesser des Rotationskopfs bzw. Siegelkopfs zu erhöhen und mehrere Halteeinrichtungen über dessen Umfang zu verteilen, um den Förderweg und damit die Einwirkdauer der beheizbaren Halteeinrichtung auf den Packstoff zu vergrößern. Allerdings würde dadurch die Verpackungsvorrichtung erheblich größer und schwerer werden.

Der vorliegenden Erfindung liegt daher die Aufgabe zugrunde, die aktive Zeit zur Bearbeitung des Artikels in einem vorzugsweise kontinuierlich rotierenden Rotationskopf zu verlängern.

Die Aufgabe der Erfindung wird gelöst durch ein Verfahren nach Anspruch 1 und eine Vorrichtung nach Anspruch 6.

Das erfindungsgemäße Verfahren zur Verpackung von kleinstückigen Artikeln, insbesondere von Lebensmittelartikeln wie Brühwürfeln oder Süßwaren, wie z.B. Hart- oder Weichkaramellen, Pralinen oder dergleichen, umfasst die Schritte:
Schritt A: Erzeugen wenigstens eines Produktstroms aus einer Vielzahl einzelner Artikel.
Schritt B: Aufnahme jedes Artikels des Produktstroms in einer Halteeinrichtung eines sich um eine Rotationsachse drehenden Rotationskopfs.
Schritt C: Fördern jedes Artikels des Produktstroms von einer Aufnahmestation zu einer Abgabestation über wenigstens eine volle Umdrehung um die Rotationsachse des Rotationskopfs.

Dabei kann die Erhöhung der Zeit zur Bearbeitung des Artikels durch Verlängerung der Wegstrecke zwischen der Aufnahmestation und der Abgabestation bewerkstelligt werden. Vorzugsweise wird der Artikel nicht innerhalb derselben Umdrehung des Rotationskopfs in der Aufnahmestation aufgenommen und in der Abgabestation wieder abgeben, sondern über wenigstens eine bzw. mehr als eine volle Umdrehung um die Rotationsachse im Rotationskopf (≥ 360°) gehalten. Dadurch wird die Zeit zur Bearbeitung des Artikels signifikant verlängert. Vorzugsweise ist jeder Artikel mit heißsiegelfähigem Packstoff umwickelt und jede Halteeinrichtung beheizbar, um den heißsiegelfähigen Packstoff zumindest zeitweise während des Förderns zur Verpackung des Artikels zu siegeln. Durch die Siegelung des Packstoffs wird der Artikel vorzugsweise primär verschlossen, um eine Faltung des Packstoffs um den Artikel zu fixieren.

Vorteilhafte Weiterbildungen der Erfindung sind Gegenstände der abhängigen Ansprüche.

Es kann von Vorteil sein, wenn Schritt A wenigstens einen der folgenden Teilschritte aufweist (die angegebene Reihenfolge der Teilschritte ist vorteilhaft, aber unverbindlich):
Teilschritt A-1: Bereitstellen einzelner Artikel, vorzugsweise in Quaderform. Alternativ dazu können Artikel mit beliebiger Form, insbesondere Artikel mit zumindest zwei parallelen Seiten, aber auch Artikel in Würfelform, Kugelform, Kugelabschnittsform oder anderen Formen nach dem erfindungsgemäßen Verfahren in der erfindungsgemäßen Vorrichtung verpackt werden.
Teilschritt A-2: Anordnen jedes Artikels in einer Förderanordnung, in welcher eine Artikellängsachse quer zur oder senkrecht zur oder in Förderrichtung ausgerichtet ist und/oder ein Artikelboden exakt oder im Wesentlichen parallel zur Förderrichtung ausgerichtet ist. Bei dieser Anordnung kann ein Packstoff dem Artikel optimal zugeordnet und auf die Seitenflächen des Artikels gefaltet werden.
Teilschritt A-3: Erzeugen mehrerer paralleler Produktströme jeweils mit einer Vielzahl einzelner Artikel. Mit parallelen Produktströmen kann die Produktionsleistung des erfindungsgemäßen Verfahrens signifikant erhöht werden.
Teilschritt A-4: Zuordnen eines heißsiegelfähigen Packstoffs zu jedem Artikel des Produktstroms, vorzugsweise umfassend wenigstens einen der folgenden Teilschritte (die angegebene Reihenfolge der Teilschritte ist vorteilhaft, aber unverbindlich):
   Teilschritt A-4-1: Vereinzeln des Packstoffs, vorzugsweise von einer Packstoffbahn. Der Packstoff kann vor oder nach der Zuordnung zu dem zu verpackenden Artikel vereinzelt werden. Eine Vereinzelung des Packstoffs vor Zuordnung zu dem zu verpackenden Artikel erleichtert die freie Positionierung des Packstoffs. Eine Vereinzelung des Packstoffs nach Zuordnung zu dem zu verpackenden Artikel erleichtert gegebenenfalls die Handhabung des Packstoffs beim Umwickeln des Artikels, da gegebenenfalls nur ein Packstoff-Haltemittel erforderlich ist, um den Packstoff gegenüber dem Artikel zu positionieren.
   Teilschritt A-4-2: Umwickeln jedes Artikels mit dem zugeordneten Packstoff, vorzugsweise durch Anordnen des Packstoffs in Schlauchform um jeden Artikel, bevorzugt derart, dass die Achse des Packstoffschlauchs und die Artikelachse zusammenfallen. Bei einer derartigen Ausführung wird der Artikel in der Regel bereits vollumfänglich von dem Packstoffschlauch umgeben, sodass lediglich die über den Artikel überstehenden Schlauchenden zu falten sind, um den Artikel vollständig zu verpacken.
   Teilschritt A-4-3: Falten des Packstoffs um jeden Artikel, vorzugsweise in Brieffaltung, Seitenfaltung, Bodenfaltung oder Päckchenfaltung, bevorzugt derart, dass überlappende Abschnitte des Packstoffs, beispielsweise die überlappend gefalteten Schlauchenden eines Packstoffschlauchs, auf entgegengesetzten, vorzugsweise parallelen Seitenflächen des Artikels angeordnet sind. Eine derartige Faltung ist insbesondere bei quaderförmigen Artikeln besonders einfach zu bewerkstelligen und hat einen minimalen Packmittelverbrauch.
   Teilschritt A-4-4: Fördern der Artikel mit dem zugeordneten Packstoff in wenigstens einem Produktstrom zu der Aufnahmestation, wobei der Artikel vorzugsweise über eine Artikelachse gehalten wird, die entlang der Förderrichtung ausgerichtet ist, bevorzugt durch Klemmung ("Halten über die Länge"). Bei dieser Ausrichtung des Artikels in einer Zuführungseinrichtung wie z.B. einem Packkopf liegen die Seitenflächen des Artikels zur Faltung des Packstoffs auf diese Seitenflächen und zur anschließenden Aufnahme durch den Rotationskopf bzw. Siegelkopf frei, sodass die Orientierung des Artikels bezüglich der Förderrichtung vor der Übergabe an den Rotationskopf bzw. Siegelkopf nicht verändert werden muss.

Es kann sich als nützlich erweisen, wenn Schritt B wenigstens einen der folgenden Teilschritte aufweist (die angegebene Reihenfolge der Teilschritte ist vorteilhaft, aber unverbindlich):
Teilschritt B-1: Überführen der Halteeinrichtung in eine Aufnahmestellung zur Aufnahme eines Artikels in der Aufnahmestation, vorzugsweise durch Öffnen der Haltebacken eines Haltebackenpaars der Halteeinrichtung. Dadurch wird die Aufnahme des Artikels vereinfacht.
Teilschritt B-2: Anordnen des Artikels in der Aufnahmestation, sodass sich der Mittelpunkt des Artikels auf dem Teilkreis des Rotationskopfs befindet und/oder die Artikelachse parallel zur Rotationsachse des Rotationskopfs ausgerichtet ist und/oder die parallelen Seitenflächen des Artikels, auf welchen überlappende Abschnitte des Packstoffs angeordnet sind, in Ebenen senkrecht zur Rotationsachse des Rotationskopfs ausgerichtet sind. Bei dieser Anordnung kann der Artikel an den exponierten Seitenflächen besonders leicht gegriffen werden.
Teilschritt B-3: Übergabe des Artikels in der Aufnahmestation an die Halteeinrichtung in deren Aufnahmestellung. Diese Maßnahme erleichtert die Handhabung des Artikels in dem Rotationskopf.
Teilschritt B-4: Überführen der Halteeinrichtung in eine Förderstellung, in welcher der Artikel zwischen zwei Haltebacken eines Haltebackenpaars der Halteeinrichtung festgelegt ist, vorzugsweise durch Klemmung, bevorzugt über eine parallel zur Rotationsachse des Rotationskopfs ausgerichtete Artikelachse, bevorzugt über parallele Seitenflächen des Artikels, auf welchen überlappende Abschnitte des Packstoffs angeordnet sind ("Halten über die Länge"). Dadurch wird der Artikel im Rotationskopf fixiert und die Halteeinrichtung bspw. in anliegenden Kontakt mit den zu siegelnden Abschnitten des Packstoffs gebracht. Eine Energiezufuhr zur Halteeinrichtung bzw. den Haltebacken kann beispielsweise mittels Induktion erfolgen. Vorzugsweise werden die Haltebacken vor der Aufnahme des Artikels mittels Induktion beheizt und geben die gespeicherte Wärmeenergie nach Aufnahme des Artikels während des Transports des Artikels von der Aufnahmein die Abgabestation an den dem Artikel zugeordneten Packstoff ab.

Es kann aber auch hilfreich sein, wenn Schritt C wenigstens einen der folgenden Teilschritte aufweist (die angegebene Reihenfolge der Teilschritte ist vorteilhaft, aber unverbindlich):
Teilschritt C-1: Überführen der den Artikel aufnehmenden Halteeinrichtung in eine Transportstellung, um die Abgabestation und/oder die Aufnahmestation zumindest bei der erstmaligen Passage nach Aufnahme des Artikels zu überspringen, während vorzugsweise eine weitere Halteeinrichtung, die bevorzugt gemeinsam mit der den Artikel aufnehmenden Halteeinrichtung gegenüber dem Rotationskopf bewegbar ist, in eine Abgabe- bzw. Aufnahmestellung zur Abgabe bzw. Aufnahme eines weiteren Artikels in der Abgabestation bzw. in der Aufnahmestation überführt wird. Vorzugsweise umfasst der Rotationskopf eine Vielzahl derartiger Arbeitsstationen mit wenigstens zwei Halteeinrichtungen pro Produktstrom, die in der Art eines Magazins bei jeder Umdrehung des Rotationskopfs in der Aufnahmestation einen Artikel pro Produktstrom aufnehmen und in der Abgabestation einen Artikel pro Produktstrom abgeben. Bei zwei Halteeinrichtungen pro Arbeitsstation und Produktstrom kann somit für jeden Produktstrom pro Umdrehung immer ein weiterer Artikel in der Transportstellung bevorratet/gespeichert werden, der ausgehend von der Artikelaufnahme nach wenigstens einer vollen Umdrehung des Rotationskopfs wieder abgegeben wird. Bei dieser Ausführung wird der gerade in der Aufnahmestation aufgenommene Artikel folglich erst in die Transportstellung gebracht und nicht bei der erstmaligen Passage der Abgabestation innerhalb derselben Umdrehung des Rotationskopfs, in welcher die Artikelaufnahme erfolgt, wieder abgegeben. Anstelle dessen wird ein in der weiteren Halteeinrichtung aufgenommener Artikel, der in der vorangehenden Umdrehung des Rotationskopfs aufgenommen wurde, in der Abgabestation abgegeben. Dieses Prinzip lässt sich auch mit mehr als zwei Halteeinrichtungen pro Arbeitsstation und Produktstrom sowie mit mehr als zwei Produktströmen verwirklichen.
Teilschritt C-2: Überführen der den Artikel aufnehmenden Halteeinrichtung in eine Abgabestellung, in welcher die Halteeinrichtung den Artikel nach wenigstens einmaliger Passage der Abgabestation und/oder der Aufnahmestation in der Abgabestation abgibt, während vorzugsweise wenigstens eine weitere Halteeinrichtung, die bevorzugt gemeinsam mit der den Artikel aufnehmenden Halteeinrichtung gegenüber dem Rotationskopf bewegbar ist, in eine Transportstellung überführt wird, um die Abgabestation und/oder die Aufnahmestation zumindest bei der erstmaligen Passage nach Aufnahme eines Artikels zu überspringen.
Teilschritt C-3: Bewegen der Halteeinrichtung mit dem darin aufgenommenen Artikel während der Drehung des Rotationskopfs um die Rotationsachse, vorzugsweise durch Drehung der Halteeinrichtung um eine weitere Achse, vorzugsweise um eine zur Rotationsachse des Rotationskopfs parallele Achse, bevorzugt gegenläufig und/oder gleichläufig zur Drehung des Rotationskopfs, besonders bevorzugt um einen Winkel von 360°/n, wobei n der Anzahl der gemeinsam um die weitere Achse drehbaren Halteeinrichtungen entspricht, während einer vollen Umdrehung des Rotationskopfs beginnend an der Aufnahmestation und/oder um 360° während des Förderns des Artikels von der Aufnahmestation bis zu der Abgabestation. Durch die Drehbewegung kann der Artikel bei Förderung im Rotationskopf auf eine Bewegungsbahn verlagert werden, die deutlich innerhalb des Teilkreises des Rotationskopfs liegt. Folglich werden die Bewegungsgeschwindigkeit des Artikels - und demnach auch die auf den Artikel einwirkenden Zentrifugalkräfte - durch Verlagerung des Artikels auf einen kleineren Bewegungsradius deutlich reduziert. Bei einer zur Drehrichtung des Rotationskopfs gegenläufigen Drehbewegung kann die Bewegungsgeschwindigkeit des Artikels zusätzlich verringert werden.
Teilschritt C-4: Ändern der Winkelgeschwindigkeit der Drehung der den Artikel aufnehmenden Halteeinrichtung um die weitere Achse zur Geschwindigkeitsanpassung bei der Übergabe des Artikels in der Aufnahmestation und/oder in der Abgabestation. Dadurch kann bei der Übergabe des Artikels in der Aufnahmestation eine Geschwindigkeitsanpassung der Halteeinrichtung an die Fördergeschwindigkeit der vorgelagerten Zuführeinrichtung erfolgen, während die Geschwindigkeit des Rotationskopfs bei der Übergabe des Artikels in der Abgabestation an die Fördergeschwindigkeit der nachgelagerten Fördereinrichtung angepasst werden kann.
Teilschritt C-5: Anhalten der Drehung der den Artikel aufnehmenden Halteeinrichtung um die weitere Achse, vorzugsweise über wenigstens eine halbe Umdrehung des Rotationskopfs, um dessen Rotationsachse, bevorzugt zwischen der Abgabestation und der Aufnahmestation. Dadurch kann der Artikel während des Förderns von der Aufnahmestation in die Abgabestation lange in einer besonders eng an der Rotationsachse des Rotationskopfs liegenden Position verweilen. Vorzugsweise können die außenliegenden Haltebacken z.B. durch Passieren eines Induktors kontaktlos erwärmt werden.
Teilschritt C-6: Ändern der Drehrichtung der Drehung der den Artikel aufnehmenden Halteeinrichtung um die weitere Achse, wobei die Drehrichtung vorzugsweise zunächst gegenläufig zur Drehrichtung des Rotationskopfs ist, anschließend gleichläufig, und dann wieder gegenläufig. Dadurch kann die Geschwindigkeit der Halteeinrichtung zur Aufnahme oder Abgabe eines Artikels in der Aufnahmestation oder der Abgabestation besonders gut an die Geschwindigkeit der vorgelagerten Zuführeinrichtung oder der nachgelagerten Fördereinrichtung angepasst werden.
Teilschritt C-7: Fördern des Artikels von der Aufnahmestation zu der Abgabestation auf einer schleifenförmigen Bewegungsbahn, die vorzugsweise um die Rotationsachse des Rotationskopfs verläuft und sich bevorzugt wenigstens einmal kreuzt, beispielsweise exakt oder im Wesentlichen auf halber Distanz zwischen der Aufnahmestation und der Abgabestation, wobei die Bewegungsbahn besonders bevorzugt auf dem Teilkreis des Rotationskopfs beginnt und/oder endet. Bei einem derartigen Bewegungsprofil ist der Artikel während der Förderung im Rotationskopf von der Aufnahmestation in die Abgabestation besonders geringen Belastungen ausgesetzt.
Teilschritt C-8: Anordnen des Artikels in der Abgabestation, sodass sich der Mittelpunkt des Artikels auf dem Teilkreis des Rotationskopfs befindet und/oder die Artikelachse parallel zur Rotationsachse des Rotationskopfs ausgerichtet ist und/oder der Artikelboden tangential zum Teilkreis des Rotationskopfs ausgerichtet ist. In dieser Anordnung kann der Artikel besonders gut an eine nachgelagerte Fördereinrichtung übergeben werden.
Teilschritt C-9: Übergabe des Artikels an eine nachgelagerte Fördereinrichtung in der Abgabestation. Dadurch können die bearbeiteten Artikel trotz der längeren Haltezeit im Rotationskopf kontinuierlich abtransportiert werden.
Teilschritt C-10: Übertragen von Wärmeenergie von der den Artikel aufnehmenden Halteeinrichtung auf den dem Artikel zugeordneten Packstoff, vorzugsweise von der Aufnahme des Artikels in der Aufnahmestation bis zur Abgabe des Artikels in der Abgabestation, bevorzugt für mehr als 0,2 Sekunden, wenigstens 0,3 Sekunden oder wenigstens 0,4 Sekunden. Diese Zeitangaben entsprechen einer Produktionsleistung von 1500 Artikeln/Minute pro Produktstrom.
Teilschritt C-11: Kontinuierliches Drehen des Rotationskopfs um die Rotationsachse mit einer konstanten Winkelgeschwindigkeit.
Teilschritt C-12: Fördern der Artikel in wenigstens zwei parallelen Produktströmen von der Aufnahmestation zur Abgabestation über wenigstens eine volle Umdrehung um die Rotationsachse des Rotationskopfs, wobei der Rotationskopf für jeden Produktstrom wenigstens zwei eigene Halteeinrichtungen aufweist, die gemeinsam um eine weitere Achse drehbar sind.

Es kann sinnvoll sein, wenn die Halteeinrichtung in einem Schritt D des Verfahrens beheizt wird, wobei Schritt D vorzugsweise wenigstens einen der folgenden Teilschritte aufweist:
Teilschritt D-1: Aufbringen einer Heizleistung auf die Halteeinrichtung, vorzugsweise durch Induktion. Dadurch sind keine Schleifkontakte zwischen stehenden und rotierenden Teilen zur Energieübertragung erforderlich.
Teilschritt D-2: Aufbringen einer Heizleistung auf die Halteeinrichtung von der Abgabe eines Artikels aus der Abgabestation bis zur Aufnahme eines weiteren Artikels in der Aufnahmestation.
Teilschritt D-3: Aufbringen einer Heizleistung auf die Halteeinrichtung in einem Zustand, in welchem die Halteeinrichtung keinen Artikel aufgenommen hat. Dieser Zeitraum ohne Haltefunktion ist für die Beheizung der Halteeinrichtung sinnvoll nutzbar.
Teilschritt D-4: Aufbringen einer Heizleistung auf die Halteeinrichtung in einem Zustand, in welchem die Halteeinrichtung auf dem Teilkreis des Rotationskopfs angeordnet ist. In diesem Zustand ist die Halteeinrichtung besonders vorteilhaft zur Energieübertragung durch eine umfangseitig am Rotationskopf angeordnete, stationäre Induktionseinrichtung angeordnet.

Ein weiterer Aspekt der vorliegenden Erfindung betrifft eine Vorrichtung zum Transportieren und ggf. Verpacken von kleinstückigen Artikeln, insbesondere von Lebensmittelartikeln wie Brühwürfeln oder Süßwaren, wie z.B. Hart- oder Weichkaramellen, Pralinen oder dergleichen, umfassend: einen um eine Rotationsachse drehbaren Rotationskopf mit wenigstens einer Halteeinrichtung, die ausgebildet ist, um einen in einem Produktstrom geförderten Artikel in einer Aufnahmestation aufzunehmen und bis zu einer Abgabestation über wenigstens eine volle Umdrehung des Rotationskopfs zu fördern. Vorzugsweise ist jeder Artikel mit heißsiegelfähigem Packstoff umwickelt und jede Halteeinrichtung beheizbar, um den heißsiegelfähigen Packstoff zumindest zeitweise während des Förderns zur Verpackung des Artikels zu siegeln. Es ergeben sich dieselben Vorteile, die zuvor im Zusammenhang mit dem erfindungsgemäßen Verfahren beschrieben wurden.

Es kann sich als vorteilhaft erweisen, wenn die Halteeinrichtung in eine Transportstellung überführbar ist, um die Abgabestation und/oder die Aufnahmestation zumindest bei der erstmaligen Passage nach Aufnahme des Artikels zu überspringen. Dadurch kann verhindert werden, dass der unmittelbar zuvor aufgenommene Artikel innerhalb derselben Umdrehung des Rotationskopfs nach der Artikelaufnahme wieder abgegeben wird, sodass der Artikel länger im Rotationskopf verweilen kann.

Es kann sinnvoll sein, wenn der Rotationskopf eine Vielzahl von Arbeitsstationen mit jeweils wenigstens zwei Halteeinrichtungen aufweist, vorzugsweise für jeden Produktstrom, wobei die Halteeinrichtungen gemeinsam gegenüber dem Rotationskopf bewegbar sind, vorzugsweise durch Drehung um eine weitere Rotationsachse, die bevorzugt parallel zur Rotationsachse des Rotationskopfs ausgerichtet ist, wobei die Arbeitsstationen besonders bevorzugt regelmäßig um die Rotationsachse des Rotationskopfs angeordnet sind und/oder wobei die Halteeinrichtungen besonders bevorzugt regelmäßig um die Rotationsachse der jeweiligen Arbeitsstation angeordnet sind. Der Rotationskopf kann insbesondere 2, 4, 6, 8, 10, 12, 14 oder 16 Arbeitsstationen aufweisen. Jede Arbeitsstation kann insbesondere 2, 3, 4, 5, 6, 7 oder 8 Haltevorrichtungen pro Produktstrom aufweisen. Der Rotationskopf kann insbesondere Artikel in 1, 2, 3 oder 4 Produktströmen parallel aufnehmen, fördern und bearbeiten.

Es kann aber auch praktisch sein, wenn der Teilkreis jeder Arbeitsstation den Teilkreis des Rotationskopfs innenseitig tangiert, wobei der Durchmesser des Teilkreises jeder Arbeitsstation vorzugsweise 10% bis 50%, bevorzugt 20% bis 30% des Durchmessers des Teilkreises des Rotationskopfs beträgt. In der Aufnahmestation und/oder in der Abgabestation ist der jeweilige Artikel vorzugsweise sowohl auf dem Teilkreis des Rotationskopfs als auch auf dem Teilkreis der Arbeitsstation angeordnet. Bei derartigen Größenverhältnissen zwischen den Teilkreisen der Arbeitsstationen und dem Teilkreis des Rotationskopfs kann eine Vielzahl von beispielsweise 8 oder 12 Arbeitsstationen auf dem Rotationskopf angeordnet werden.

Es kann sich als nützlich erweisen, wenn die Halteeinrichtungen jeder Arbeitsstation derart gekoppelt sind, dass wenn eine erste Halteeinrichtung dieser Arbeitsstation in eine Transportstellung überführt wird, um die Abgabestation und/oder die Aufnahmestation zumindest bei der erstmaligen Passage nach Aufnahme des Artikels zu überspringen, eine zweite Halteeinrichtung dieser Arbeitsstation gleichzeitig in eine Abgabe- bzw. Aufnahmestellung zur Abgabe bzw. Aufnahme eines weiteren Artikels in der Abgabestation bzw. in der Aufnahmestation überführt wird. Idealerweise weist jede Arbeitsstation für jeden Produktstrom wenigstens zwei Halteeinrichtungen auf, wobei bei Überführung einer dieser Halteeinrichtungen in die Transportstellung eine andere dieser Halteeinrichtungen in die Abgabe- bzw. Aufnahmestellung überführt wird.

Weitere vorteilhafte Weiterbildungen der Erfindung ergeben sich durch Kombinationen der Merkmale, die in der Beschreibung, den Patentansprüchen und Zeichnungen offenbart sind.

### Begriffe und Definitionen

Der Begriff "wenigstens eine volle Umdrehung" bedeutet im Rahmen dieser Erfindung einen beliebigen Winkel von mindestens 360°, wobei der Winkel kein Vielfaches von 360° sein muss, sondern lediglich größer als 360° ist.

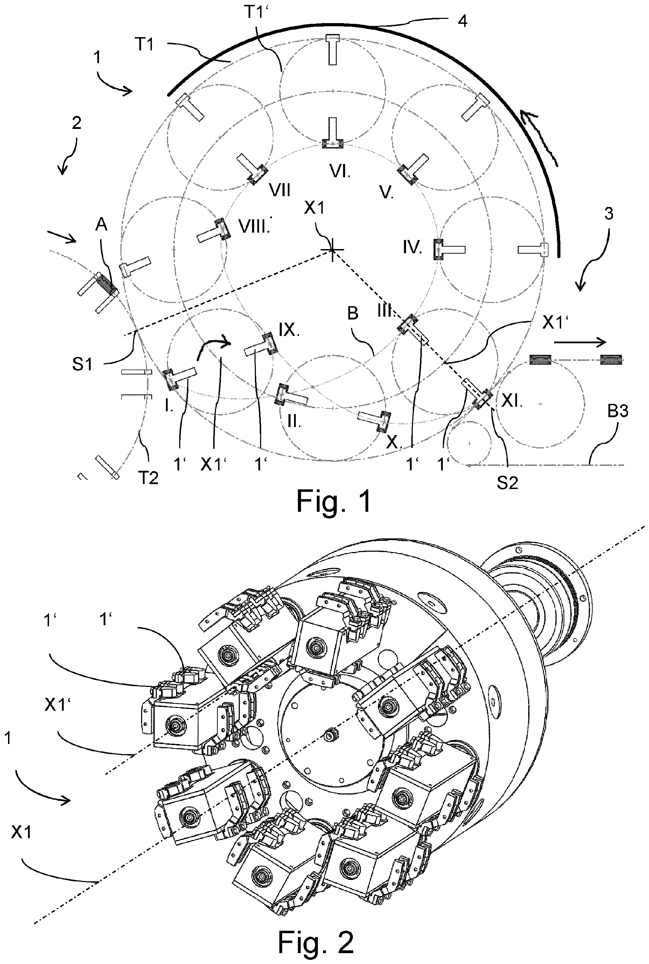

Es wird als "Passage" der Abgabestation bzw. der Aufnahmestation bezeichnet, wenn ein Objekt (z.B. die den Artikel aufnehmende Halteeinrichtung) in einer Ansicht entlang der Rotationsachse des Rotationskopfs (vgl. Fig. 1) eine imaginäre Verbindungslinie zwischen der Rotationsachse des Rotationskopfs und der Abgabestation bzw. der Aufnahmestation (in Fig. 1 als gestrichelte Linie eingezeichnet) durchläuft.

### Kurze Beschreibung der Figuren

Es zeigen:
Figur 1 eine schematische Ansicht der erfindungsgemäßen Vorrichtung zur Erläuterung des erfindungsgemäßen Verfahrens, wobei ein Rotationskopf bzw. Siegelkopf mit einer Vielzahl von relativ zum Rotationskopf bewegbaren Arbeitsstationen mit jeweils zwei gemeinsam um eine weitere Achse drehbaren Halteeinrichtungen Artikel in einer Aufnahmestation von einer vorgelagerten Zuführeinrichtung aufnimmt und nach mehr als einer Umdrehung um die Rotationsachse des Rotationskopfs in einer Abgabestation an eine nachgelagerte Fördereinrichtung abgibt.
Figur 2 eine perspektivische Ansicht eines Rotationskopfs einer erfindungsgemäßen Vorrichtung mit acht Arbeitsstationen.
Figur 3 eine perspektivische Ansicht eines Rotationskopfs gemäß Fig. 2 mit lediglich zwei montierten Arbeitsstationen, wobei die sechs weiteren Arbeitsstationen des Rotationskopfs zu Darstellungszwecken weggelassen sind.
Figur 4 eine perspektivische Ansicht einer Arbeitsstation des Rotationskopfs gemäß Fig. 2 mit insgesamt vier Halteeinrichtungen, wovon jeweils zwei Halteeinrichtungen für jeden Produktstrom bereitgestellt sind und diese jeweils um 180° versetzt bezüglich einer Rotationsachse der Arbeitsstation angeordnet sind.

### Detaillierte Beschreibung des bevorzugten Ausführungsbeispiels

Die erfindungsgemäße Verpackungsvorrichtung umfasst als zentrales Element einen auch als Siegelkopf bezeichneten Rotationskopf 1 mit insgesamt acht Arbeitsstationen, die regelmäßig um den Umfang des Rotationskopfs 1 verteilt sind und pro Produktstrom jeweils zwei gemeinsam um eine weitere Achse X1' drehbare Halteeinrichtungen 1' aufweisen. Der Rotationskopf 1 ist um eine Rotationsachse X1 drehbar. Die Rotationsachse X1 stellt für die Beschreibung des Bewegungsablaufs der im Rotationskopf 1 geförderten Artikel A einen wichtigen Bezugspunkt dar.

Der Rotationskopf 1 ist ausgebildet, um die in wenigstens einem kontinuierlich geförderten Produktstrom zugeführten Artikel A mit einem jeweils zugeordneten Packstoff einzeln nacheinander in einer Aufnahmestation S1 von einer vorgelagerten Zuführeinrichtung 2 (Packkopf) aufzunehmen und den dem jeweiligen Artikel A zugeordneten Packstoff während des Förderns des Artikels A bis zur Abgabe in einer Abgabestation S2 an eine nachgelagerte Fördereinrichtung 3 nach mehr als einer Umdrehung um die Rotationsachse des Rotationskopfes 1 durch Wärmezufuhr zu Siegeln.

Jede der acht Arbeitsstationen umfasst, wie in Figur 1 dargestellt, wenigstens zwei miteinander verbundene Halteeinrichtungen 1', die gemeinsam um eine zur Rotationsachse X1 des Rotationskopfs 1 parallele Rotationsachse X1' der jeweiligen Arbeitsstation drehbar sind. Die Rotationsachsen X1' der acht Arbeitsstationen sind bezüglich der Rotationsachse X1 des Rotationskopfs 1 in gleichem Abstand/Radius und mit gleichen Winkelabständen von jeweils 45° zueinander angeordnet. Die Teilkreise T1' der Arbeitsstationen tangieren den Teilkreis T1 des Rotationskopfs 1 von innen. Der Teilkreis T1' jeder Arbeitsstation beschreibt die Bewegungsbahn des in der Halteeinrichtung 1' aufgenommenen Artikels A bei einer Umdrehung um die Rotationsachse X1' der Arbeitsstation. Der Durchmesser des Teilkreises T1' jeder Arbeitsstation entspricht in etwa einem Vierteldurchmesser des Teilkreises T1 des Rotationskopfs 1. Der Teilkreis T1 des Rotationskopfs 1 beschreibt im Wesentlichen die Bewegungsbahn des in einer Halteeinrichtung 1' aufgenommenen Artikels A bei einer Umdrehung um die Rotationsachse A1 des Rotationskopf 1 in der radial äußersten Stellung dieser Halteeinrichtung 1'. Im vorliegenden Ausführungsbeispiel sind die demselben Produktstrom zugeordneten Halteeinrichtungen 1' in gleichem Abstand/Radius und mit gleichen Winkelabständen von jeweils 180° bezüglich der Rotationsachse X1' der Arbeitsstation versetzt zueinander angeordnet. Es liegt aber auch im Rahmen der Erfindung, dass jede Arbeitsstation auch mehr als zwei Halteeinrichtungen 1' aufweisen kann. In diesem Fall können die Halteeinrichtungen 1' in Abständen von 360/n, wobei n der Anzahl der Halteeinrichtungen 1' pro Arbeitsstation anzeigt, regelmäßig um die Rotationsachse X1' der Arbeitsstation angeordnet werden, d. h. in Winkelabständen von 120° bei drei Halteeinrichtungen 1', in Winkelabständen von 90° bei vier Halteeinrichtungen 1' usw.

Im dargestellten Ausführungsbeispiel werden quaderförmige Artikel A, beispielsweise Brühblöcke oder Brühwürfel, mit der erfindungsgemäßen Vorrichtung nach dem erfindungsgemäßen Verfahren verpackt, wobei der dem Artikel A zugeordnete, heißsiegelfähige Packstoff durch Wärmezufuhr über die beheizbaren Halteeinrichtungen 1' gesiegelt wird. Anstelle quaderförmiger Artikel A können aber auch anders geformte Artikel A mit der erfindungsgemäßen Vorrichtung nach dem erfindungsgemäßen Verfahren verpackt bzw. der diesem Artikel A zugeordnete Packstoff gesiegelt werden.

In der Zuführeinrichtung 2, die im vorliegenden Ausführungsbeispiel als Rotationskopf bzw. Pacckopf ausgebildet ist, werden die bereits mit Packstoff umwickelten Artikel A zunächst "über die Breite" gegriffen, d. h. jeder Artikel wird von zwei Haltebacken eines Haltebackenpaars der Zuführeinrichtung 2 über eine Artikelachse eingeklemmt, die tangential zum Teilkreis T2 der Zuführeinrichtung 2 verläuft, wobei die beiden größten Seitenflächen des Artikels A ebenfalls tangential zu gedachten Kreisen um die Rotationsachse der Zuführeinrichtung 2 angeordnet sind. Dabei wird jedem Artikel A ein Packstoff zugeordnet und der Artikel A mit diesem Packstoff schlauchförmig umwickelt. Anschließend werden die Schlauchenden vorzugsweise in Seitenfaltung auf die kleinsten Seitenflächen der Artikel A gefaltet, die nun zur Siegelung im Rotationskopf exponiert sind. Die Drehrichtung der Zuführeinrichtung 2 ist durch einen Pfeil angezeigt. Bei Erreichen der Aufnahmestation S1 ist jeder Artikel A so angeordnet, dass sich der Mittelpunkt des Artikels A auf dem Teilkreis T1 des Rotationskopfs 1 befindet und die Artikelachse, die durch die Seitenflächen mit den überlappend gefalteten Packstoffabschnitten verläuft, parallel zur Rotationsachse X1 des Rotationskopfs 1 ausgerichtet ist. Die parallelen Seitenflächen des Artikels A, auf welchen überlappende Abschnitte des Packstoffs angeordnet sein können, sind in Ebenen senkrecht zur Rotationsachse X1 des Rotationskopfs 1 ausgerichtet. Die Aufnahmestation S1 wird hierbei durch den Punkt definiert, an welchem sich die Teilkreise T1, T2 des Rotationskopfs 1 und der Zuführeinrichtung 2 tangieren. Im Übergabepunkt des Artikels A von der Zuführeinrichtung 2 an den Rotationskopf 1 bzw. in der Aufnahmestation S1 tangieren sich Teilkreise T1, T2 des Rotationskopfs 1 und der Zuführeinrichtung 2 sowie der Teilkreis T1' der jeweiligen Arbeitsstation.

Zur Aufnahme eines Artikels A in der Aufnahmestation S1 wird die entsprechende Halteeinrichtung 1' in eine Aufnahmestellung gebracht, in welcher die Haltebacken eines Haltebackenpaars der Halteeinrichtung 1' geöffnet werden, um den mit der Zuführungseinrichtung 2 zugeführten Artikel A "über die Länge" bzw. über die Artikelachse mit der längsten Ausdehnung, die parallel zur Rotationsachse X1 ausgerichtet ist, an den Seitenflächen mit den überlappend gefalteten Packstoffabschnitten einzuklemmen.

Ausgehend von der Aufnahmestation S1 wird der Bewegungsablauf jedes Artikels A während der Förderung durch den Rotationskopf 1 bis zur Abgabestation S2 in einzelnen Zuständen, die in Figur 1 mit I bis XI beziffert sind, erläutert. Die Drehrichtung des Rotationskopfes 1 ist im Gegenuhrzeigersinn und durch einen Pfeil angezeigt. Vorzugsweise wird der dem Artikel A zugeordnete Packstoff während der gesamten Förderung des Artikels A von der Aufnahme in der Aufnahmestation S1 bis zur Abgabe in der Abgabestation S2 durch Abgabe von Wärmeenergie von der den Artikel A aufnehmenden Halteeinrichtung 1' an den dem Artikel A zugeordneten Packstoff durchgehend gesiegelt. Es ist aber auch möglich, dass die Siegelung nur temporär während der Förderung stattfindet. Die Aufnahme von Wärmeenergie durch die Halteeinrichtung 1' wird vorzugsweise bewerkstelligt, indem die Halteeinrichtung 1' in einem Zustand, in welchem sie keinen Artikel A aufnimmt, durch eine Induktionsstrecke läuft und dabei Wärme z.B. durch ein wechselndes Magnetfeld induziert wird. Die Halteeinrichtung 1' besteht vorzugsweise aus Metall.

Im Zustand I hat die den Artikel A aufnehmende Halteeinrichtung 1' die Aufnahmestation S1 bereits passiert und ausgehend von der Aufnahmestation S1 in etwa eine Sechzehntelumdrehung bzw. 22,5° um die Rotationsachse X1 des Rotationskopfs 1 zurückgelegt. Die den Artikel A aufnehmende Halteeinrichtung 1' ist gegenüber deren Stellung in der Aufnahmestation S1 gegenläufig zur Drehung des Rotationskopfes 1, d. h. im Uhrzeigersinn, in etwa um einen ähnlichen Winkel um die Rotationsachse X1' der zugehörigen Arbeitsstation "nach innen" verdreht. Dabei wird der Artikel A in das Innere des Teilkreises T1 des Rotationskopfs 1 in Richtung dessen Rotationsachse X1 verlagert, wodurch sich die Umfangsgeschwindigkeit des Artikels A um die Rotationsachse X1 verringert. Gleichzeitig wird die mit der ersten Halteeinrichtung 1' verbundene zweite Halteeinrichtung 1' derselben Arbeitsstation um die Rotationsachse X1 "nach außen" gedreht und dabei von der Rotationsachse X1 des Rotationskopfs 1 weg verlagert.

Im Zustand II sind gegenüber dem Zustand I sowohl die Drehung der den Artikel A aufnehmenden Halteeinrichtung 1' um die Rotationsachse X1' der zugehörigen Arbeitsstation als auch die dazu gegenläufige Drehung des Rotationskopfs 1 um die Rotationsachse X1 weiter fortgeschritten.

Im Zustand III passiert die den Artikel A aufnehmende Halteeinrichtung 1' nach Artikelaufnahme erstmals die Abgabestation S2, befindet sich allerdings in einer Transportstellung, in welcher die den Artikel A aufnehmende Halteeinrichtung 1' die Abgabestation S2 überspringt und folglich keinen Artikel A an die nachgelagerte Fördereinrichtung abgibt. Im Übergabepunkt des Artikels A vom Rotationskopf 1 an die nachgelagerte Fördereinrichtung 3 bzw. in der Abgabestation S2 tangieren sich der Teilkreis T1 des Rotationskopfs 1 und der Teilkreis T1' der jeweiligen Arbeitsstation sowie die Bewegungsbahn B3 etwaiger Transportelemente der Fördereinrichtung 3. In der Transportstellung ist die Halteeinrichtung 1', welche die Abgabestation S2 überspringt, gegenüber der Aufnahme des Artikels A in der Aufnahmestation S1 um 180° um die Rotationsachse X1' der Arbeitsstation versetzt angeordnet und befindet sich demnach nicht auf dem Teilkreis T1 des Rotationskopfs 1. Demnach wird der in der Halteeinrichtung 1' angeordnete Artikel A bei der erstmaligen Passage der Abgabestation S2 nicht an selbige abgegeben, sondern in der Transportstellung der Halteeinrichtung 1' über die Abgabestation S2 hinweg transportiert. Die jeweils andere Halteeinrichtung 1' derselben Arbeitsstation befindet sich genau in der Abgabestation S2 (vgl. Zustand XI) und gibt einen in der vorangehenden Umdrehung aufgenommenen Artikel A nach mehr als einer vollen Umdrehung um die Rotationsachse X1 des Rotationskopfs 1 an die nachgelagerte Fördereinrichtung 3 ab.

In den Zuständen IV bis VII bleibt die Drehstellung der den Artikel A aufnehmenden Halteeinrichtung 1' bezüglich der Rotationsachse X1' der jeweiligen Arbeitsstation unverändert. Demnach wird der Artikel A in diesen Zuständen IV bis VII auf einem Radius um die Rotationsachse X1 des Rotationskopfs 1 bewegt, der gegenüber dem Radius des Teilkreises T1 des Rotationskopfs 1 um den Durchmesser des Teilkreises T1' der Arbeitsstation verringert ist. Folglich ist die Umfangsgeschwindigkeit des Artikels A in dieser Transportstellung der Halteeinrichtung 1' deutlich kleiner - und die auf den Artikel A einwirkenden Zentrifugalkräfte deutlich geringer - als wenn sich der Artikel auf dem Teilkreis T1 des Rotationskopfs 1 befindet. Die auf dem Teilkreis T1 des Rotationskopfs 1 angeordnete Halteeinrichtung 1', die den Artikel zuvor in der Abgabestation S2 abgegeben hat und folglich unmittelbar keinen Artikel A aufnimmt, durchläuft zwischen der Abgabestation S2 und der Aufnahmestation S1 eine Induktionsstrecke 4, um Wärmeenergie durch Induktion in der Halteeinrichtung 1' zu erzeugen. Diese Wärmeenergie wird in der Halteeinrichtung 1' gespeichert und nach Aufnahme des Artikels A in der Aufnahmestation S1 während des Förderns des Artikels A in die Abgabestation S2 an den dem Artikel A zugeordneten Packstoff abgegeben.

Im Zustand VIII kann die Arbeitsstation zur Vorbereitung der Aufnahme eines weiteren Artikels A mit einer freien Halteeinrichtung 1'geringfügig gleichläufig mit der Drehrichtung des Rotationskopfes 1 um dessen Rotationsachse X1 um die Rotationsachse X1' der Arbeitsstation gedreht werden, wie in Figur 1 angezeigt ist. Durch Umkehren der Bewegungsrichtung kann eine Geschwindigkeitsangleichung der Bewegungsgeschwindigkeit der den Artikel A zukünftig aufnehmenden Halteeinrichtung 1' an die Fördergeschwindigkeit des Artikels in der Zuführeinrichtung 2 erreicht werden. Mit Erreichen der Aufnahmestation S1 dreht sich die Arbeitsstation wieder gegenläufig zur Drehung des Rotationskopfs 1.

Im Zustand IX hat die Arbeitsstation die Aufnahmestation S1 bereits passiert, da sie sich in Figur 1 in Drehrichtung des Rotationskopfs 1 jenseits der gestrichelten Linie befindet, die die Rotationsachse X1 des Rotationskopfs 1 mit dem die Aufnahmestation S1 kennzeichnenden Punkt, an welchem sich die Teilkreise T1, T2 des Rotationskopfes 1 und der Zuführeinrichtung 2 tangieren, verbindet. Die jeweils andere Halteinrichtung 1' derselben Arbeitsstation hat in der Aufnahmestation S1 unmittelbar zuvor einen weiteren Artikel A aufgenommen und dieser befindet sich im eben beschriebenen Bewegungsablauf des Artikels A in Zustand I. Gegenüber dem Zustand VIII ist der Artikel A in Zustand IX gegenläufig zur Drehrichtung des Rotationskopfs 1 um die Rotationsachse X1' der Arbeitsstation verdreht und bewegt sich folglich wieder "nach außen", d.h. weg von der Rotationsachse X1 des Rotationskopfs 1 in Richtung des Teilkreises T1 des Rotationskopfs 1 auf einen größeren Bewegungsradius. Folglich nimmt die Bewegungsgeschwindigkeit des Artikels A vor Erreichen der Abgabestation S2 wieder zu.

Im Zustand X ist der Artikel A gegenüber dem Zustand IX um die Rotationsachse X1 der Arbeitsstation weiter verdreht, und zwar gegenläufig zur Drehrichtung des Rotationskopfs 1. Der Artikel A hat dabei die eigene zuvor zwischen den Zuständen II und III durchlaufende Bewegungsbahn B gekreuzt.

Im Zustand XI befindet sich die den Artikel A aufnehmende Halteeinrichtung 1' in der Abgabestation S2, wobei der Artikel A auf dem Teilkreis T1 des Rotationskopfs 1 positioniert ist. In dieser Abgabestation S2 erfolgt die Abgabe des Artikels A an die nachgelagerte Fördereinrichtung 3. Die weitere Halteinrichtung 1' derselben Arbeitsstation befindet sich dabei in der Transferstellung, die zuvor im Zusammenhang mit Zustand III erläutert wurde.

Als zentrales Element umfasst die vorliegende Erfindung demnach einen kontinuierlich umlaufenden Siegelkopf bzw. Rotationskopf 1, der mit einer Vielzahl von beispielsweise acht oder zwölf rotierenden Mehrfachstationen ausgestattet ist, die um parallele Rotationsachsen gegenläufig und/oder gleichläufig zur Drehung des Rotationskopfs 1 um dessen Rotationsachse X1 rotieren können, sodass jeder Artikel A zwischen einer Aufnahmestation S1 und einer Abgabestation S2 über mehr als eine Umdrehung um die Rotationsachse X1 des Rotationskopfs 1 gefördert wird.

Im Ergebnis wird durch die Verwendung der rotierenden Mehrfachstationen die Siegelzeit zur Siegelung des dem Artikel A zugeordneten Packstoffs im Rotationskopf 1 wesentlich verlängert, insbesondere verdoppelt (d.h. bei einer Produktionsleistung von 1500 Prod./min pro Produktstrom/Bahn von 0,2 auf 0,4s), während gleichzeitig ein einzelproduktspezifisches, produktschonendes Siegeln auf dem Rotationskopf 1 stattfindet.

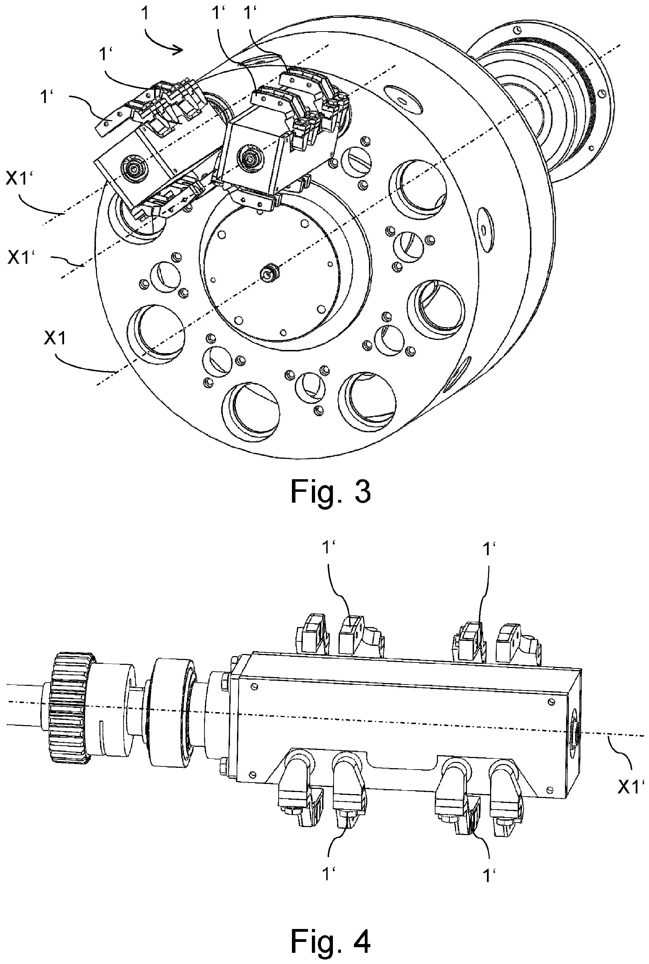

Fig. 2 zeigt eine perspektivische Ansicht eines Rotationskopfs 1 der erfindungsgemäßen Vorrichtung und Fig. 3 eine perspektivische Ansicht einer einzelnen Arbeitsstation.

Jede der Arbeitsstationen des in Figur 2 dargestellten Rotationskopfs 1 kann mit ihren insgesamt vier Halteeinrichtungen 1' bis zu zwei Artikel A für jeden von zwei parallelen Produktströmen gleichzeitig halten. Außerdem vollführt diese Doppelstation mit jeder Umdrehung des Rotationskopfs 1 um dessen Rotationsachse X1 vorzugsweise achsparallel dazu zunächst eine 180°-Drehung (vorzugsweise als Pilgerschrittbewegung ausgeführt) bei der der außenliegende Artikel A nach innen und der innen liegende Artikel A nach außen geschwenkt wird. Die Arbeitsstation rotiert im Wesentlichen im Uhrzeigersinn und damit gegenläufig zur Drehrichtung des Rotationskopfs 1, um im Übergabepunkt bzw. in der Aufnahmestation S1 einen Geschwindigkeitsangleich an die Fördergeschwindigkeit des Artikels A in der Zuführeinrichtung 2 zu erreichen. Der in der anderen Halteeinrichtung 1' derselben Arbeitsstation aufgenommene Artikel A wurde in der vorangegangenen Kopfumdrehung aufgenommen und wird erst nach wenigstens einer vollen Umdrehung des Rotationskopf 1 im Anschluss an die Artikelaufnahme in der Abgabestation S2 abgegeben.

Im Schutzbereich der Erfindung, die durch die angehängten Ansprüche definiert wird, sind Abwandlungen von den Offenbarten Ausführungsformen möglich.

### Bezugszeichenliste

- 1: Rotationskopf
- 1': Halteeinrichtung
- 2: Zuführeinrichtung (Packkopf)
- 3: Fördereinrichtung
- 4: Induktionsstrecke
- A: Artikel
- B: Bewegungsbahn des Artikels
- B3: Bewegungsbahn in der Fördereinrichtung
- S1: Aufnahmestation
- S2: Abgabestation
- T1: Teilkreis des Rotationskopfs
- T1': Teilkreis der Arbeitsstation
- T2: Teilkreis der Zuführeinrichtung (Packkopf)
- X1: Rotationsachse des Rotationskopfs
- X1': Rotationsachse der Arbeitsstation

## Patentansprüche

1. Verfahren zum Transportieren und ggf. Verpacken von kleinstückigen Artikeln (A), insbesondere von Lebensmittelartikeln wie Brühwürfeln oder Süßwaren, wie z.B. Hart- oder Weichkaramellen, Pralinen oder dergleichen, umfassend die Schritte:
a. Schritt A: Erzeugen wenigstens eines Produktstroms aus einer Vielzahl einzelner Artikel (A);
b. Schritt B: Aufnahme jedes Artikels (A) des Produktstroms in einer Halteeinrichtung (1') eines sich um eine Rotationsachse (X1) drehenden Rotationskopfs (1); **gekennzeichnet durch**
c. Schritt C: Fördern jedes Artikels (A) des Produktstroms von einer Aufnahmestation (S1) zu einer Abgabestation (S2) über wenigstens eine volle Umdrehung um die Rotationsachse (X1) des Rotationskopfs (1).

2. Verfahren nach Anspruch 1, **dadurch gekennzeichnet, dass** Schritt A wenigstens einen der folgenden Teilschritte aufweist:
a. Teilschritt A-1: Bereitstellen einzelner Artikel (A), vorzugsweise in Quaderform.
b. Teilschritt A-2: Anordnen jedes Artikels in einer Förderanordnung, in welcher eine Artikellängsachse quer zur oder senkrecht zur oder in Förderrichtung ausgerichtet ist und/oder ein Artikelboden exakt oder im Wesentlichen parallel zur Förderrichtung ausgerichtet ist.
c. Teilschritt A-3: Erzeugen mehrerer paralleler Produktströme jeweils mit einer Vielzahl einzelner Artikel (A).
d. Teilschritt A-4: Zuordnen eines heißsiegelfähigen Packstoffs zu jedem Artikel (A) des Produktstroms, vorzugsweise umfassend wenigstens einen der folgenden Teilschritte:
i. Teilschritt A-4-1: Vereinzeln des Packstoffs, vorzugsweise von einer Packstoffbahn.
ii. Teilschritt A-4-2: Umwickeln jedes Artikels (A) mit dem zugeordneten Packstoff, vorzugsweise durch Anordnen des Packstoffs in Schlauchform um jeden Artikel (A), bevorzugt derart, dass die Achse des Packstoffschlauchs und die Artikelachse zusammenfallen.
iii. Teilschritt A-4-3: Falten des Packstoffs um jeden Artikel (A), vorzugsweise in Brieffaltung, Seitenfaltung, Bodenfaltung oder Päckchenfaltung, bevorzugt derart, dass überlappende Abschnitte des Packstoffs, beispielsweise die überlappend gefalteten Schlauchenden eines Packstoffschlauchs, auf entgegengesetzten, vorzugsweise parallelen Seitenflächen des Artikels (A) angeordnet sind.
iv. Teilschritt A-4-4: Fördern der Artikel (A) mit dem zugeordneten Packstoff in wenigstens einem Produktstrom zu der Aufnahmestation (S1), wobei der Artikel (A) vorzugsweise über eine Artikelachse gehalten wird, die entlang der Förderrichtung ausgerichtet ist, bevorzugt durch Klemmung.

3. Verfahren nach einem der vorangehenden Ansprüche, **dadurch gekennzeichnet, dass** Schritt B wenigstens einen der folgenden Teilschritte aufweist:
a. Teilschritt B-1: Überführen der Halteeinrichtung (1') in eine Aufnahmestellung zur Aufnahme eines Artikels (A) in der Aufnahmestation (S1), vorzugsweise durch Öffnen der Haltebacken eines Haltebackenpaars der Halteeinrichtung (1').
b. Teilschritt B-2: Anordnen des Artikels (A) in der Aufnahmestation (S1), sodass sich der Mittelpunkt des Artikels (A) auf dem Teilkreis (T1) des Rotationskopfs (1) befindet und/oder die Artikelachse parallel zur Rotationsachse (X1) des Rotationskopfs (1) ausgerichtet ist und/oder die parallelen Seitenflächen des Artikels (A), auf welchen überlappende Abschnitte des Packstoffs angeordnet sind, in Ebenen senkrecht zur Rotationsachse (X1) des Rotationskopfs (1) ausgerichtet sind.
c. Teilschritt B-3: Übergabe des Artikels (A) in der Aufnahmestation (S1) an die Halteeinrichtung (1') in deren Aufnahmestellung.
d. Teilschritt B-4: Überführen der Halteeinrichtung (1') in eine Förderstellung, in welcher der Artikel (A) zwischen zwei Haltebacken eines Haltebackenpaars (1') der Halteeinrichtung festgelegt ist, vorzugsweise durch Klemmung, bevorzugt über eine parallel zur Rotationsachse (X1) des Rotationskopfs (1) ausgerichtete Artikelachse, bevorzugt über parallele Seitenflächen des Artikels (A), auf welchen überlappende Abschnitte des Packstoffs angeordnet sind.

4. Verfahren nach einem der vorangehenden Ansprüche, **dadurch gekennzeichnet, dass** Schritt C wenigstens einen der folgenden Teilschritte aufweist:
a. Teilschritt C-1: Überführen der den Artikel (A) aufnehmenden Halteeinrichtung (1') in eine Transportstellung, um die Abgabestation (S2) und/oder die Aufnahmestation (S1) zumindest bei der erstmaligen Passage nach Aufnahme des Artikels (A) zu überspringen, während vorzugsweise eine weitere Halteeinrichtung (1'), die bevorzugt gemeinsam mit der den Artikel (A) aufnehmenden Halteeinrichtung (1') gegenüber dem Rotationskopf (1) bewegbar ist, in eine Abgabe- bzw. Aufnahmestellung zur Abgabe bzw. Aufnahme eines weiteren Artikels (A) in der Abgabestation (S2) bzw. in der Aufnahmestation (S1) überführt wird.
b. Teilschritt C-2: Überführen der den Artikel (A) aufnehmenden Halteeinrichtung (1') in eine Abgabestellung, in welcher die Halteeinrichtung (1') den Artikel (A) nach wenigstens einmaliger Passage der Abgabestation (S2) und/oder der Aufnahmestation (S1) in der Abgabestation (S2) abgibt, während vorzugsweise wenigstens eine weitere Halteeinrichtung (1'), die bevorzugt gemeinsam mit der den Artikel (A) aufnehmenden Halteeinrichtung (1') gegenüber dem Rotationskopf (1) bewegbar ist, in eine Transportstellung überführt wird, um die Abgabestation (S2) und/oder die Aufnahmestation (S1) zumindest bei der erstmaligen Passage nach Aufnahme eines Artikels (A) zu überspringen.
c. Teilschritt C-3: Bewegen der Halteeinrichtung (1') mit dem darin aufgenommenen Artikel (A) während der Drehung des Rotationskopfs (1) um die Rotationsachse (X1), vorzugsweise durch Drehung der Halteeinrichtung (1') um eine weitere Achse (X1'), vorzugsweise um eine zur Rotationsachse (X1) des Rotationskopfs (1) parallele Achse (X1'), bevorzugt gegenläufig und/oder gleichläufig zur Drehung des Rotationskopfs (1), besonders bevorzugt um einen Winkel von 360°/n, wobei n der Anzahl der gemeinsam um die weitere Achse drehbaren Halteeinrichtungen entspricht, während einer Umdrehung des Rotationskopfs beginnend an der Aufnahmestation (S1) und/oder um 360° während des Förderns des Artikels (A) von der Aufnahmestation (S1) bis zu der Abgabestation (S2).
d. Teilschritt C-4: Ändern der Winkelgeschwindigkeit der Drehung der den Artikel (A) aufnehmenden Halteeinrichtung (1') um die weitere Achse (X1') zur Geschwindigkeitsanpassung bei der Übergabe des Artikels in der Aufnahmestation und/oder in der Abgabestation.
e. Teilschritt C-5: Anhalten der Drehung der den Artikel (A) aufnehmenden Halteeinrichtung (1') um die weitere Achse (X1'), vorzugsweise über wenigstens eine halbe Umdrehung des Rotationskopfs (1), um dessen Rotationsachse (X1), bevorzugt zwischen der Abgabestation (S2) und der Aufnahmestation (S1).
f. Teilschritt C-6: Ändern der Drehrichtung der Drehung der den Artikel (A) aufnehmenden Halteeinrichtung (1') um die weitere Achse (X1'), wobei die Drehrichtung vorzugsweise zunächst gegenläufig zur Drehrichtung des Rotationskopfs (1) ist, anschließend gleichläufig, und dann wieder gegenläufig.
g. Teilschritt C-7: Fördern des Artikels (A) von der Aufnahmestation (S1) zu der Abgabestation (S2) auf einer schleifenförmigen Bewegungsbahn (B), die vorzugsweise um die Rotationsachse (X1) des Rotationskopfs (1) verläuft und sich bevorzugt wenigstens einmal kreuzt, beispielsweise exakt oder im Wesentlichen auf halber Distanz zwischen der Aufnahmestation (S1) und der Abgabestation (S2), wobei die Bewegungsbahn (B) besonders bevorzugt auf dem Teilkreis (T1) des Rotationskopfs (1) beginnt und/oder endet.
h. Teilschritt C-8: Anordnen des Artikels (A) in der Abgabestation (S2), in welcher sich der Mittelpunkt des Artikels (A) auf dem Teilkreis (T1) des Rotationskopfs (1) befindet und/oder die Artikelachse parallel zur Rotationsachse (X1) des Rotationskopfs (1) ausgerichtet ist und/oder der Artikelboden tangential zum Teilkreis (T1) des Rotationskopfs (1) ausgerichtet ist.
i. Teilschritt C-9: Übergabe des Artikels (A) an eine nachgelagerte Fördereinrichtung (3) in der Abgabestation (S2).
j. Teilschritt C-10: Übertragen von Wärmeenergie von der den Artikel (A) aufnehmenden Halteeinrichtung (1') an den dem Artikel (1) zugeordneten Packstoff, vorzugsweise von der Aufnahme des Artikels (A) in der Aufnahmestation (S1) bis zur Abgabe des Artikels (A) in der Abgabestation (S2), besonders bevorzugt für mehr als 0,2 Sekunden, wenigstens 0,3 Sekunden oder wenigstens 0,4 Sekunden.
k. Teilschritt C-11: Kontinuierliches Drehen des Rotationskopfs (1) um die Rotationsachse (X1) mit einer konstanten Winkelgeschwindigkeit.
l. Teilschritt C-12: Fördern der Artikel (A) in wenigstens zwei parallelen Produktströmen von der Aufnahmestation (S1) zur Abgabestation (S2) über wenigstens eine volle Umdrehung um die Rotationsachse (X1) des Rotationskopfs (1), wobei der Rotationskopf (1) für jeden Produktstrom wenigstens zwei eigene Halteeinrichtungen (1') aufweist, die gemeinsam um eine weitere Achse (X1') drehbar sind.

5. Verfahren nach einem der vorangehenden Ansprüche, **dadurch gekennzeichnet, dass** die Halteeinrichtung (1') in einem Schritt D des Verfahrens beheizt wird, wobei Schritt D vorzugsweise wenigstens einen der folgenden Teilschritte aufweist:
a. Teilschritt D-1: Aufbringen einer Heizleistung auf die Halteeinrichtung (1'), vorzugsweise durch Induktion.
b. Teilschritt D-2: Aufbringen einer Heizleistung auf die Halteeinrichtung (1') von der Abgabe eines Artikels (A) aus der Abgabestation (S2) bis zur Aufnahme eines weiteren Artikels (A) in der Aufnahmestation (S1).
c. Teilschritt D-3: Aufbringen einer Heizleistung auf die Halteeinrichtung (1') in einem Zustand, in welchem die Halteeinrichtung (1') keinen Artikel (A) aufgenommen hat.
d. Teilschritt D-4: Aufbringen einer Heizleistung auf die Halteeinrichtung (1') in einem Zustand, in welchem die Halteeinrichtung (1') auf dem Teilkreis (T1) des Rotationskopfs (1) angeordnet ist.

6. Vorrichtung zum Transportieren und ggf. Verpacken von kleinstückigen Artikeln, insbesondere von Lebensmittelartikeln wie Brühwürfeln oder Süßwaren, wie z.B. Hart- oder Weichkaramellen, Pralinen oder dergleichen, umfassend: einen um eine Rotationsachse (X1) drehbaren Rotationskopf (1) mit wenigstens einer Halteeinrichtung (1'), die ausgebildet ist, um einen in einem Produktstrom geförderten Artikel (A) in einer Aufnahmestation (S1) aufzunehmen und bis zu einer Abgabestation (S2) über wenigstens eine Umdrehung des Rotationskopfs (1) zu fördern.

7. Vorrichtung nach Anspruch 6, **dadurch gekennzeichnet, dass** die Halteeinrichtung (1') in eine Transportstellung überführbar ist, um die Abgabestation (S2) und/oder die Aufnahmestation (S1) zumindest bei der erstmaligen Passage nach Aufnahme des Artikels (A) zu überspringen.

8. Vorrichtung nach einem der Ansprüche 6 oder 7, **dadurch gekennzeichnet, dass** der Rotationskopf (1) eine Vielzahl von Arbeitsstationen mit jeweils wenigstens zwei Halteeinrichtungen (1') aufweist, vorzugsweise für jeden Produktstrom, wobei die Halteeinrichtungen (1') gemeinsam gegenüber dem Rotationskopf (1) bewegbar sind, vorzugsweise durch Drehung um eine weitere Rotationsachse (X1'), die bevorzugt parallel zur Rotationsachse (X1) des Rotationskopfs (1) ausgerichtet ist, wobei die Arbeitsstationen besonders bevorzugt regelmäßig um die Rotationsachse (X1) des Rotationskopfs (1) angeordnet sind und/oder wobei die Halteeinrichtungen (1') besonders bevorzugt regelmäßig um die Rotationsachse (X1') der jeweiligen Arbeitsstation angeordnet sind.

9. Vorrichtung nach Anspruch 8, **dadurch gekennzeichnet, dass** der Teilkreis (T1') jeder Arbeitsstation den Teilkreis (T1) des Rotationskopfs (1) innenseitig tangiert, wobei der Durchmesser des Teilkreises (T1') jeder Arbeitsstation vorzugsweise 10% bis 50%, bevorzugt 20% bis 30% des Durchmessers des Teilkreises (T1) des Rotationskopfs (1) beträgt.

10. Vorrichtung nach einem der Ansprüche 8 oder 9, **dadurch gekennzeichnet, dass** die Halteeinrichtungen (1') jeder Arbeitsstation derart gekoppelt sind, dass wenn eine erste Halteeinrichtung (1') dieser Arbeitsstation in eine Transportstellung überführt wird, um die Abgabestation (S2) und/oder die Aufnahmestation (S1) zumindest bei der erstmaligen Passage nach Aufnahme eines Artikels (A) zu überspringen, eine zweite Halteeinrichtung (1') dieser Arbeitsstation gleichzeitig in eine Abgabe- bzw. Aufnahmestellung zur Abgabe bzw. Aufnahme eines weiteren Artikels (A) in der Abgabestation (S2) bzw. in der Aufnahmestation (S1) überführt wird.
